# DEMANDE DE BREVET EUROPEEN

(11) **EP 0 885 850 A1**
(43) Date de publication de la demande: **23.12.1998**
(21) Numéro de dépôt: 98460024.7
(22) Date de dépôt: 18.06.1998
(51) Int. Cl.: C02F 1/52, B01D 37/03

(54) **Procédé de contrôle et de régulation de la perte de charge dans un filtre biologique et installation pour la mise en oeuvre d'un tel procédé**

(30) Priorité: 19.06.1997 FR 9707884
(71) Demandeur: OTV Omnium de Traitements et de Valorisation, 94417 St Maurice Cédex (FR)
(72) Inventeur: Payraudeau, Michèle, 95600 Eaubonne (FR)
(74) Mandataire: Vidon, Patrice

(57) **Abrégé**

L'invention concerne un procédé de contrôle et de régulation de la perte de charge dans un filtre biologique du type comprenant un lit filtrant immergé (2) constitué d'au moins une couche d'un matériau de filtration granulaire, ladite couche de matériau granulaire servant de support à une biomasse utilisée pour dégrader la pollution carbonée et/ou azotée d'une eau à filtrer, caractérisé en ce qu'il comprend une étape consistant à injecter, de façon continue ou non, au moins un agent coagulant (11) dans ladite eau avant son entrée dans ledit filtre.

## Description

L'invention concerne le domaine du traitement de l'eau.

Plus précisément, l'invention se rapporte à un procédé permettant de contrôler et de réguler la perte de charge dans un filtre biologique du type comprenant un lit filtrant constitué d'au moins une couche d'un matériau de filtration granulaire, ladite couche de matériau granulaire servant de support à une biomasse utilisée pour dégrader la pollution carbonée et/ou azotée de l'eau à filtrer.

L'invention trouve tout particulièrement son application dans le domaine de l'épuration biologique des eaux usées mais pourra également être mise en oeuvre dans les filtres biologiques utilisés dans le cadre de la potabilisation de l'eau. Les biofiltres sont en effet classiquement utilisés pour le traitement des eaux résiduaires en vue de leur épuration mais trouvent également maintenant leur application dans le traitement de l'eau en vue de sa potabilisation.

De tels lits filtrants sont constitués d'une ou plusieurs couches de matériaux granulaires pouvant être de densité supérieure à celle de l'eau, tels que par exemple du sable ou du gravier, ou de densité inférieure à celle de l'eau, tels que par exemple le polystyrène expansé. Ces matériaux peuvent présenter des granulométries variables en fonction du degré de filtration recherché. Selon les configurations de filtres, l'eau traitée dans ce type de dispositif peut connaître un mouvement ascendant ou un mouvement descendant. A titre d'exemple, on peut citer parmi les dispositifs de filtration à lit immergé connu de l'état de la technique, le filtre décrit dans le brevet européen EP - 265303 au nom de la Déposante dont le lit filtrant est constitué de plusieurs couches de matériaux granulaires.

Les filtres biologiques de ce type présentent de nombreux avantages au rang desquels on peut citer la possibilité de traiter différents types de pollution (carbonée et/ou azotée) dans un volume de traitement restreint et leur capacité élevée de traitement.

De par leur fonction même de filtration impliquant la rétention de matières en suspension et la croissance de la biomasse qu'ils abritent, la perte de charge observée au cours des cycles de filtration augmente progressivement. C'est la raison pour laquelle ces biofiltres sont pourvus de moyens permettant de laver périodiquement le matériau granulaire afin de le décharger des impuretés qu'il a retenu. De tels lavages sont généralement effectués en utilisant de l'eau filtrée ou de l'eau brute ou encore un mélange d'eau et d'air et sont mis en oeuvre après avoir stoppé le fonctionnement du filtre en mode de filtration au cours de cycles de lavage. Le lavage à l'eau peut être effectué par distribution d'eau propre à partir des moyens de distribution utilisés pour les eaux à traiter ou encore par distribution d'eau filtrée à contre-courant du courant de traitement (rétro-lavage). Dans le cas de l'utilisation d'un rétro-lavage, le dispositif de distribution de l'eau en mode de filtration peut être utilisé pour collecter l'eau de rétro-lavage. Pour assurer un bon fonctionnement du filtre, les lavages sont effectués généralement à intervalles réguliers, par exemple toutes les 24 heures. Leur durée est fonction de la technique de lavage utilisée et de l'importance du colmatage. En règles générales ces lavages présentent une durée comprise entre 5mn et 60 mn. Grâce à l'alternance de tels cycles de filtration et de lavage, il est possible d'obtenir d'excellents résultats de filtration biologique grâce à de tels filtres.

De plus, lorsque le biofiltre doit être utilisé au delà de la capacité nominale pour lequel il a été dimensionné, c'est-à-dire lorsque l'eau à traiter connaît une augmentation importante de sa charge polluante ou bien encore lorsque le débit des eaux à traiter augmentent brutalement, il est tout à fait possible de conserver les performances de ce filtre en augmentant la fréquence des cycles de lavage. Une telle solution présente toutefois l'inconvénient d'interrompre plus fréquemment le fonctionnement du filtre. Il a donc été envisagé dans l'état de la technique différentes solutions pour conserver des fréquences de cycles de lavage tendant vers la normale même lorsque celui-ci est utilisé au-delà de sa capacité nominale.

Une de ces solutions consiste à effectuer de courtes périodes de lavage ("mini-lavages") entre deux cycles de lavage consécutifs, par exemple sous forme de chasses d'eau. Une telle solution est utilisée notamment dans les filtres fonctionnant en flux ascendants dans lesquels un espace est prévu au-dessus du lit filtrant, espace permettant la constitution d'une réserve d'eau filtrée pouvant être utilisée pour les cycles de lavage mais aussi pour réaliser de courtes chasses d'eau entre les cycles de lavage. Toutefois, une telle solution, quoiqu'intéressante, n'est pas toujours extrêmement efficace et présente l'inconvénient d'impliquer de courtes interruption du filtre, ce qui peut conduire dans certains cas à une légère perturbation du fonctionnement de celui-ci.

Une autre solution consiste à effectuer une aération séquencée du matériau filtrant. Il a en effet été constaté qu'une telle aération, décrite en détails dans le brevet français FR2565962 au nom de la Déposante, permettait d'obtenir une meilleure répartition des matières en suspension au sein du lit granulaire, ce qui permet d'augmenter la durée des cycles de filtration et de réduire les quantités d'eau nécessaires pour la mise en oeuvre des cycles de lavage. Une telle solution présente toutefois l'inconvénient de ne pouvoir être mise en oeuvre que pour les biofiltres dont le matériau de filtration sert de support à une biomasse aérobie destinée à dégrader la pollution carbonée de l'effluent ou à nitrifier la pollution ammoniacale de l'eau contenue dans cette eau. Par contre, elle ne peut évidemment pas être mise en oeuvre pour décolmater les filtres dont le matériau granulaire est utilisé pour supporter une biomasse devant être utilisée en anaérobiose pour dénitrifier l'effluent traité.

L'objectif de la présente invention est de proposer un procédé permettant de contrôler et de réguler la perte de charge dans un filtre biologique, lorsque celui-ci est utilisé au-delà de la capacité nominale pour lequel il a été dimensionné.

Notamment, un objectif de l'invention est de décrire un tel procédé qui permette dans ce cas d'augmenter la durée des cycles de filtration, c'est-à-dire la durée entre deux cycles consécutifs de lavage.

Encore un autre objectif de l'invention est de divulguer un tel procédé qui autorise, en cas d'augmentation de la charge polluante dans le flux d'eau à traiter, le maintien de la durée des cycles de filtration tout en conservant les performances filtrantes du filtre.

Encore un autre objectif est de divulguer un tel procédé qui permette, pour un degré de colmatage donné, de diminuer les quantités d'eau de lavage devant être utilisées au cours des cycles de lavage.

Encore un autre objectif de la présente invention est de proposer un tel procédé qui puisse être mis en oeuvre sans interrompre la filtration.

Ces différents objectifs sont atteints grâce à l'invention qui concerne un procédé permettant de contrôler et de réguler la perte de charge dans un filtre biologique du type comprenant un lit filtrant immergé constitué d'au moins une couche d'un matériau de filtration granulaire, ladite couche de matériau granulaire servant de support à une biomasse utilisée pour dégrader la pollution carbonée et/ou azotée d'une eau à filtrer, ledit procédé étant caractérisé en ce qu'il comprend une étape consistant à injecter, de façon continue ou non, au moins un agent coagulant dans ladite eau avant son entrée dans ledit filtre.

Ainsi, l'invention propose une solution inattendue au problème de colmatage progressif des filtres biologiques consistant à injecter, durant la filtration, au moins un agent coagulant dans l'eau à filtrer.

On notera que les agents coagulants sont classiquement utilisés dans le domaine du traitement de l'eau, dans le cadre des traitements de floculation visant à débarrasser les eaux des particules colloïdales qu'elles contiennent. La floculation est une action physico-chimique qui a pour but de modifier l'état des particules contenues dans l'eau et principalement des particules colloïdales électriquement chargées négativement en surface. Dans, l'eau ces particules ont tendance à exercer un action électrique répulsive. Pour pouvoir les éliminer par décantation, il convient de neutraliser leur charge électrique en ajoutant un agent coagulant constitué par un composé ionisé positivement. Dans les procédés classiques, ce coagulant peut être constitué par un polymère chargé ou encore par un sel métallique. Les sels métalliques les plus fréquemment utilisés sont le chlorure ferrique, le sulfate ferrique, le sulfate ferreux, le sulfate d'alumine, les polymères d'aluminium tels que le polychlorure d'aluminium (WAC). L'utilisation de tels agents coagulants conduit à la formation de flocs qui peuvent ultérieurement être éliminés par décantation.

Compte-tenu de l'utilisation connue des agents coagulants dans le cadre du processus de floculation qui conduit à une agrégation des particules colloïdales, l'homme de l'art aurait logiquement déduit que l'utilisation de tels composés au sein d'un biofiltre n'aurait pu conduire qu'à accroître le colmatage de celui-ci. Or, la présente invention établit tout au contraire que l'introduction d'un agent coagulant dans l'eau à filtrer juste avant qu'elle ne soit traitée dans le biofiltre a un effet inverse consistant à différer ce colmatage et ainsi à réduire la perte de charge observée dans le biofiltre. On notera par ailleurs que la déposante n'a pas élucidé avec certitude le mode d'action des agents coagulants dans le processus de décolmatation.

Afin d'observer le résultat permis par l'objet de la présente invention, à savoir la diminution de la perte de charge au sein d'un biofiltre lorsque celui-ci doit être utilisé au delà de sa capacité nominale, l'injection de l'agent coagulant (ou, le cas échéant, des agents coagulants) peut être effectuée de façon empirique, par exemple selon des intervalles de temps réguliers entre deux cycles de lavages du matériau filtrant. Toutefois, selon une variante préférentielle de mise en oeuvre du procédé selon l'invention, celui-ci comprend une étape consistant à surveiller la perte de charge dudit filtre, l'injection d'agent coagulant étant alors effectuée lorsque la valeur de la perte de charge dudit filtre atteint une valeur supérieure de référence prédéterminée.

La durée de l'injection d'agent coagulant pourra également être établie de façon plus ou moins empirique. Toutefois, également préférentiellement, le procédé comprend une étape consistant à injecter au moins un agent coagulant pendant un temps suffisant pour permettre à la perte de charge d'atteindre une valeur inférieure de référence prédéterminée. Cette valeur inférieure peut être constituée avantageusement par la valeur de la perte de charge initiale observée à l'issue du dernier cycle de lavage mis en oeuvre.

Selon de telles variantes préférentielles, il est ainsi possible de définir une plage de valeurs de perte de charge bornée par une valeur supérieure, à compter de laquelle l'injection de l'agent coagulant peut être mise en oeuvre, et par une valeur inférieure, à compter de laquelle l'injection en question peut être stoppée et de subordonner l'injection d'agent coagulant à l'entrée dans cette plage de la valeur de perte de charge observée.

A ce sujet, on notera également que le déclenchement de l'injection de l'agent coagulant pourra être effectuée de façon automatique grâce à des moyens de mesure automatique de la perte de charge observée à la sortie du filtre.

En ce qui concerne le réactif coagulant pouvant être utilisé dans le cadre de la présente invention, celui-ci est préférentiellement un sel métallique bien qu'il ne soit pas exclu que d'autres types d'agents coagulants aient le même effet.

Avantageusement, ce sel métallique est choisi dans le groupe constitué par le chlorure ferrique, le sulfate ferrique, le sulfate ferreux, le sulfate d'alumine, les polymères d'aluminium (tels que le "WAC" (nom commercial )).

Préférentiellement, ledit agent coagulant est injecté à raison de 5 à 50 mg/l dans l'eau à filtrer et de façon préférée entre toutes à raison de 10 à 20 mg/l.

L'invention concerne également un filtre biologique pour le traitement de l'eau spécialement conçu pour la mise en oeuvre du procédé décrit ci-dessus incluant un lit filtrant immergé constitué d'au moins une couche d'un matériau de filtration granulaire ensemencé par une biomasse, des moyens d'amenée des eaux à traiter dans le filtre, des moyens d'évacuation des eaux filtrées, caractérisé en ce qu'il présente des moyens de mesure de la perte de charge à la sortie dudit lit filtrant immergé et des moyens d'amenée d'au moins un agent coagulant dans l'eau à filtrer avant son entrée dans ledit lit filtrant immergé.

Préférentiellement, ledit filtre comprend des moyens d'activation et de désactivation automatiques desdits moyens d'amenée lorsque la perte de charge observée est comprise dans une plage de valeurs prédéterminée.

L'invention, ainsi que les différents avantages qu'elle présente, seront plus facilement compris grâce à la description qui va suivre d'un mode non limitatif de réalisation de celle-ci en référence aux dessins, dans lesquels :
- la figure 1 représente une vue schématique d'un filtre biologique pour la mise en oeuvre du procédé selon l'invention ;
- la figure 2 représente un graphe montrant l'évolution de la perte de charge en fonction du temps et à débit d'eau constant dans le biofiltre représenté à la figure 1 en l'absence de l'injection d'agent coagulant telle que préconisée par l'invention ;
- la figure 3 représente un graphe montrant l'évolution de la perte de charge en fonction du temps et à débit d'eau constant dans le biofiltre représenté à la figure 1 en mettant en oeuvre l'injection d'agent coagulant telle que préconisée par l'invention.

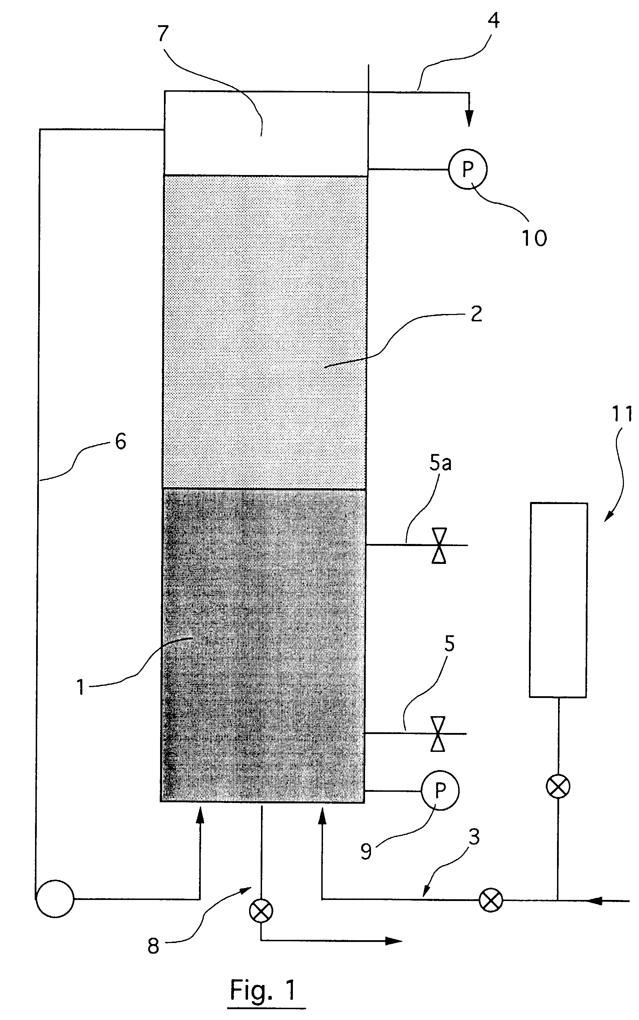

Le filtre biologique représenté à la figure 1 inclut un réacteur 1 pourvu d'un lit de matériau granulaire 2 servant de support à une biomasse, de moyens d'amenée 3 d'une eau à traiter prévus dans la partie inférieure du réacteur, et de moyens d'évacuation 4 de l'eau traitée après qu'elle ait transité au sein du lit de matériau granulaire 2 prévus dans la partie supérieure du réacteur. Le filtre est pourvu d'une rampe d'aération inférieure 5 ainsi que d'une rampe d'aération intermédiaire 5a prévue afin de pouvoir définir, en cas de besoin, une zone de filtration aérée supérieure et une zone de filtration anoxique inférieure. Egalement classiquement une boucle de recirculation 6 des eaux filtrées est également prévue. Le réacteur présente dans sa partie supérieure, une zone 7 prévue au-dessus du matériau filtrant et permettant de constituer une réserve d'eau traitée et est par ailleurs pourvu de moyens de purge 8 prévus dans la partie inférieure du filtre.

Conformément à la présente invention, le réacteur est pourvu de moyens de mesure de la perte de charge comprenant :
- un premier capteur 9 prévu dans la partie inférieure du filtre permettant de mesurer la pression Pe de l'eau lors de son entrée dans le lit filtrant,
- un second capteur 10 prévu dans la partie supérieure du filtre et permettant de mesurer la pression Ps de l'eau à sa sortie du matériau filtrant et donc d'en déduire la perte de charge totale dans le matériau (Pe - Ps).

Egalement conformément à l'invention, le filtre est équipé de moyens de distribution 11 d'un agent coagulant dans les eaux à traiter. Dans le cadre du présent mode de réalisation, cet agent coagulant est constitué par du chlorure ferrique sous forme de liquide.

Dans le cadre du présent mode de réalisation, le filtre décrit a été utilisé pour effectuer la nitrification tertiaire d'un effluent. Bien évidemment, le procédé selon l'invention ne dépend nullement de la configuration du filtre et celui-ci pourra bien sûr être utilisé en configuration de nitrification-dénitrification, d'abattement de la pollution carbonée ou encore de dénitrification seule.

Le fonctionnement de ce filtre en mode de filtration est le suivant. Les eaux à traiter arrivent par les moyens d'amenée 3 à l'intérieur du réacteur et sont filtrées par passage à travers le lit de matériau granulaire, avant d'être évacuées par les moyens d'évacuation 4. Si ce filtre est configuré pour traiter la pollution azotée des eaux, la rampe d'aération est mise en oeuvre et une partie de l'eau traitée est recirculée en zone anoxique grâce à la boucle de recirculation 6. Conformément à la présente invention, du chlorure ferrique peut être distribué dans les eaux traitées.

Lorsque le lit filtrant doit être débarrassé de ses impuretés, la filtration est interrompue et un cycle de lavage est mis en oeuvre. Dans ce cadre, l'arrivée d'eau à traiter est fermée, et les moyens de purge 8 sont actionnés de façon à faire transiter selon un flux descendant l'eau filtrée accumulée dans la zone supérieure 7 du réacteur avec éventuellement un apport d'air en alternance. Le réacteur peut alors de nouveau être utilisé en mode de filtration.

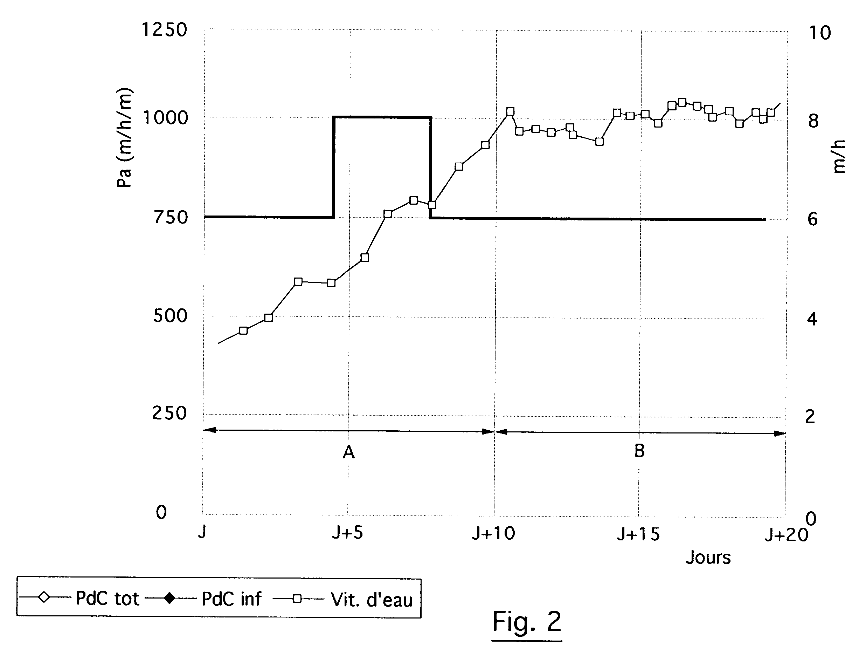

En référence à la figure 2 et à titre d'exemple comparatif, le filtre biologique représenté à la figure 1 a été utilisé, selon l'art antérieur, sans injection d'agent coagulant entre les cycles de lavage. Une vitesse d'eau constante de 6 m / h (sauf pendant une brève période de 3 jours durant laquelle la vitesse a été portée à 8 m / h) et une qualité d'eau sensiblement constante ont été utilisées.

La perte de charge totale observée au cours de la filtration a été mesurée à la fois à la sortie du lit filtrant en mesurant la différence des pressions relevées par les capteurs 9 et 10. Les cycles de lavage ont été symbolisés sur le graphe par des carrés blancs.

Au cours des dix premiers jours de service du biofiltre (période A), le lit filtrant a été lavé régulièrement toutes les 24 heures sauf le huitième jour durant lequel deux lavages ont été effectués dans la journée. On a observé au cours de cette période A une augmentation quasi-linéaire de la perte de charge correspondant à une augmentation croissante de l'encrassement du filtre. En pratique, la perte de charge totale est passée au cours de cette période d'environ 400 à environ 1000 Pa/(m/h)/m de matériau.

A compter du 11 ème jour et jusqu'au 30 ème jour (période B), il a été nécessaire d'augmenter la fréquence des cycles de lavage à deux lavages par jour voir trois lavages par jour. Cette augmentation de la fréquence a permis de maintenir la perte de charge totale à environ 1000 Pa/(m/h)/m sans toutefois autoriser un abaissement significatif de cette valeur.

Conformément à la présente invention, le filtre a ensuite été testé en mettant en oeuvre des injections de chlorure ferrique à raison d'une dose de 20 mg/l. Différentes durées d'injection, allant de 1 jour à 5 jours ont été mises en oeuvre. En pratique, cette injection a été pratiquée en utilisant les moyens d'injection 11 d'agent coagulant prévu dans le filtre selon l'invention.

Durant la période de test, la vitesse de l'eau transitant dans le filtre a été maintenue à une valeur constante de 6 m/h, à l'image de la vitesse utilisée dans l'exemple de référence indiqué ci-dessus. La qualité de l'eau à filtrer a été sensiblement constante et sensiblement égale à celle de l'eau traitée au cours de la période comparative détaillée ci-dessus.

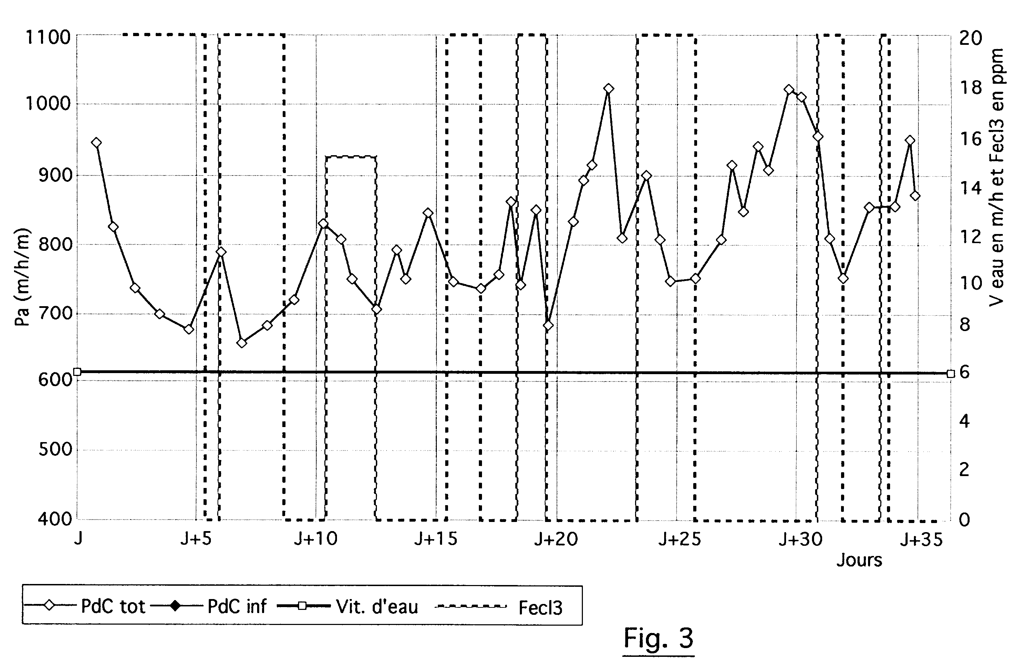

En référence à la figure 3, les injections d'agent coagulant sont portées sur le graphe en ligne pointillé. Différentes durées d'injection ont été testées, allant d'une journée à cinq jours. Comme le montre clairement ces figures, ces injections ont permis de diminuer de façon significative la perte de charge totale tout en maintenant une fréquence de lavage à un lavage par jour, exceptionnellement deux lavages par jour. En pratique, ces injections ont permis de ramener la perte de charge totale à une valeur d'environ 800 Pa/(m/h)/m tout en conservant une fréquence faible des cycles de lavages.

L'invention permet donc de diminuer de façon importante le coût de mise en oeuvre des filtres biologiques en diminuant la fréquence de cycles de lavages nécessaires au maintien des performances du filtre, notamment en cas d'utilisation du filtre au-delà de sa capacité nominale.

Le mode de réalisation de l'invention ici décrit n'a pas pour objet de réduire la portée de l'invention. Il pourra donc y être apporté de nombreuses modifications sans sortir du cadre de celle-ci. En particulier, on notera qu'il pourra être envisagé d'utiliser un autre agent que le chlorure ferrique et que le procédé selon l'invention pourra être mis en oeuvre sur n'importe quel biofiltre intégrant au moins un lit de filtration granulaire devant être périodiquement débarrassé des impuretés qu'il a retenu.

## Revendications

1. Procédé de contrôle et de régulation de la perte de charge dans un filtre biologique du type comprenant un lit filtrant immergé constitué d'au moins une couche d'un matériau de filtration granulaire, ladite couche de matériau granulaire servant de support à une biomasse utilisée pour dégrader la pollution carbonée et/ou azotée d'une eau à filtrer,
caractérisé en ce qu'il comprend une étape consistant à injecter, de façon continue ou non, au moins un agent coagulant dans ladite eau avant son entrée dans ledit filtre.

2. Procédé selon la revendication 1 caractérisé en ce qu'il comprend une étape consistant à surveiller la perte de charge dudit filtre, l'injection dudit agent coagulant étant mise en oeuvre lorsque la valeur de la perte de charge dudit filtre atteint une valeur supérieure de référence prédéterminée.

3. Procédé selon la revendication 2 caractérisé en ce que ladite étape consistant à injecter au moins un agent coagulant est mis en oeuvre pendant un temps suffisant pour permettre à la perte de charge d'atteindre une valeur inférieure de référence prédéterminée.

4. Procédé selon la revendication 3 caractérisé en ce que ladite valeur inférieure de référence est constituée par la valeur de la perte de charge initiale observée après le dernier cycle de lavage mis en oeuvre.

5. Procédé selon les revendications 2 et 3, ou 2 et 4 caractérisé en ce qu'il consiste à mettre en oeuvre automatiquement l'injection de l'agent coagulant lorsque la perte de charge observée à la sortie du filtre est comprise entre ladite valeur supérieure prédéterminée et ladite valeur inférieure prédéterminée.

6. Procédé selon l'une quelconque des revendications 1 à 5 caractérisé en ce que ledit agent coagulant est un sel métallique.

7. Procédé selon la revendication 6 caractérisé en ce que ledit sel métallique est choisi dans le groupe constitué par le chlorure ferrique, le sulfate ferrique, le sulfate ferreux, le sulfate d'alumine, les polymères d'aluminium.

8. Procédé selon l'une quelconque des revendications 1 à 7 caractérisé en ce que ledit agent coagulant est injecté à raison de 5 à 50mg/l.

9. Procédé selon la revendication 8 caractérisé en ce que ledit agent coagulant est injecté à raison de 10 à 20 mg/l.

10. Filtre biologique pour le traitement de l'eau spécialement conçu pour la mise en oeuvre du procédé selon l'une des revendications 1 à 9 incluant un lit filtrant immergé (2) constitué d'au moins une couche d'un matériau de filtration granulaire ensemencé par une biomasse, des moyens d'amenée (3) des eaux à filtrer et des moyens d'évacuation des eaux filtrées (4),
caractérisé en ce qu'il présente des moyens de mesure de la perte de charge (9,10) à la sortie dudit lit filtrant immergé (2) et des moyens d'amenée (11) d'au moins un agent coagulant dans l'eau à filtrer avant son entrée dans ledit lit filtrant immergé.

11. Filtre biologique selon la revendication 9 caractérisé en ce qu'il comprend des moyens d'activation et de désactivation automatiques desdits moyens d'amenée lorsque la perte de charge observée est comprise dans une plage de valeurs prédéterminée.
